# EUROPEAN PATENT APPLICATION

(11) **EP 1 974 954 A1**
(43) Date of publication of application: **01.10.2008**
(21) Application number: 08006109.6
(22) Date of filing: 28.03.2008
(51) Int. Cl.: B60B 27/00, B60B 27/02

(54) **Rolling bearing unit for wheel and method for manufacturing the same**

(30) Priority: 30.03.2007 JP 2007094088
(71) Applicant: JTEKT Corporation, Osaka-shi Osaka 542-8502 (JP)
(72) Inventor: Harada, Katsuyuki, Osaka-shi Osaka 542-8502 (JP); Yu, Changxin, Osaka-shi Osaka 542-8502 (JP)
(74) Representative: Görz, Ingo

(57) **Abstract**

In a rolling bearing unit for a wheel of the invention, a first inner ring side raceway which confronts an outer ring side raceway formed on an inner circumferential surface of an outer ring is formed on an outer circumferential surface of a hub wheel, and a second inner ring side raceway is formed on a.n outer circumferential surface of an inner ring shaft portion. The inner ring shaft portion is made up of a large diameter shaft portion which is formed on an outer circumferential surface of the second inner ring side raceway and a.small diameter shaft portion which is inserted into a shaft fitting hole in the hub wheel in such a manner as to pass therethrough. In addition, the inner ring shaft portion is connected to the hub wheel by forming a calking portion by calking an end portion of the small diameter shaft portion.

## Description

### BACKGROUND OF THE INVENTION

### 1. Field of the Invention

The present invention relates to a rolling bearing unit for a wheel that is mounted on, for example, a wheel of a motor vehicle and a method for manufacturing the same.

### 2. Related Art

When it is for, for example, a driven wheel, a rolling bearing unit for a wheel that is mounted on a wheel of a motor vehicle is such as described as the related art in JP-A-2001-162338, and this is shown in Fig. 4. This rolling bearing unit for a wheel includes a hub wheel 110 which includes a flange portion 111 that is mounted on a wheel at one end portion and a shaft portion 112 at the other end portion and a double row (two row) rolling bearing 120 which is formed on an outer circumferential surface of the shaft portion 112 of the hub wheel 110. The end portion of the shaft portion 112 of the hub wheel 110 where the flange portion 111 is formed into a large diameter portion 113 on an outer circumferential surface of which one of double inner ring side raceways 121 is formed, and the other or opposite end portion of the shaft portion 112 is formed into a small diameter portion 114 on an outer circumferential surface of which an inner ring 122 is mounted in such a manner as to fit thereon. The rolling bearing 120 includes double outer circumference side raceways 123 on an inner circumferential surface and has on an outer circumferential surface thereof an outer ring 125 which includes a flange part 124 that is mounted on an axle case, not shown, and an internal member which confronts the outer ring 125. This internal member is made up of the one inner ring side raceway 121 formed on the outer circumferential surface of the large diameter portion 113 of the hub wheel 110 and the inner ring 122 which includes the other inner ring side raceway 121 and which is mounted on the small diameter portion 114 of the hub wheel 110. In addition, an annular space portion is defined between the internal member and the outer ring 125, and rolling elements 126 and cages 127 which retain the rolling elements 126 in predetermined positions are disposed in an interior of the annular space portion, sealing devices 128 being mounted at both ends of the annular space portion. Note that the sealing device is not shown which is mounted at the end where the inner ring 122 is provided.

Bolt insertion holes 115 are formed in the flange portion 111 of the hub wheel 110 at several locations in a circumferential direction. A disk brake unit mounting bolt is inserted into each bolt insertion hole 115 in such a manner as to pass therethrough. A small diameter cylindrical portion 116 is formed on the end portion of the hub wheel 110 where the flange portion 111 is formed in such a manner as to project from a central portion of the flange portion 111. In addition, a disk rotor of the disk brake unit, not shown, is detachably mounted on the small diameter cylindrical portion 116 by the bolts in such a state that the disk rotor is in tight contact with one side of the flange portion 111.

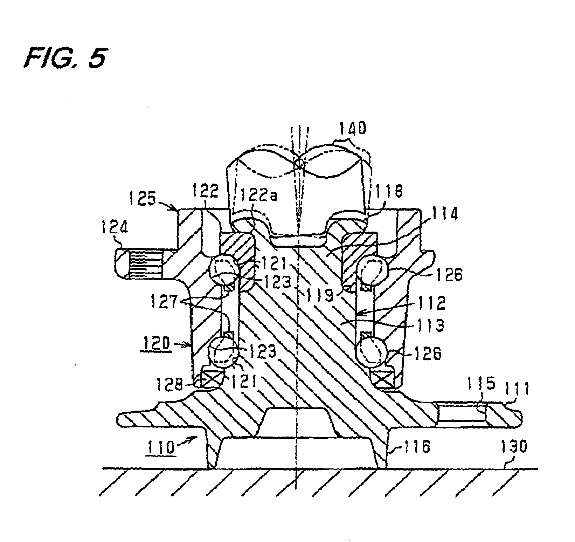

In addition, the inner ring 122 is mounted using an inexpensive method in which a calking portion 118 is formed at an end portion of the small diameter portion 114 of the hub wheel 110. Because of this, a calking cylindrical portion 117 is formed at the end portion of the small diameter portion 114 of the hub wheel 110. Then, the calking portion 118 is formed by the calking cylindrical portion 117 being pressed against an end face of the inner ring 122 while the calking cylindrical portion 117 is clamped or expanded diametrically outwards. This calking work is performed, as is shown in Fig. 5, by placing the rolling bearing unit for a wheel or the wheel rolling bearing unit on a base table 130 with its end where the calking portion 118 is formed oriented upwards and pushing down a calking jig 140 with a predetermined calking force while rolling it. The calking work like this eventually causes the inner ring 122 and the outer ring 125 to be pressed against each other via the rolling elements 126 and also causes the inner ring 122 to be pressed against a stepped portion 119 which is formed at a boundary between the large diameter portion 113 and the small diameter portion 114 of the hub wheel 110, whereby not only is the dislocation of the inner ring 22 prevented but also a suitable pressurization is imparted to the inner ring 122, the rolling elements 126 and the outer ring 125 in such a manner as to cause them to be pressed against each other. In addition, by the pressurization being imparted in such a way, an axial force (an axial load) is, exerted to the rolling elements 126 from the inner ring 122, whereby the outer ring 125 and the inner ring 122 are put in a compressed state so that the rolling elements 126 are allowed to roll properly between the outer ring 125 and the inner ring 122. In addition, in this state, the axial force so exerted reaches several tons.

When the general calking method like this is adopted, however, there occurs a case where a calking force exceeding the estimated force is imparted, and in the event that the case actually occurs, there is caused a fear that the following three mutually conflicting phenomena are produced by the calking work. Namely, when the calking work is carried out, the wheel rolling bearing unit is placed on the base table 130 in such a state that the wheel rolling bearing unit is supported by the small diameter cylindrical portion 116. Because of this, a region to which the calking force applied to the calking portion 118 is exerted is smaller than an inside diameter of the small diameter cylindrical portion 116 which is located below the calking portion 118, and when the calking work is carried out, there is caused a fear that an overload may be exerted which deforms the small diameter cylindrical portion 116 radially outwards. Consequently, depending upon the calking conditions, the small diameter cylindrical portion 16 is deformed, whereby the flange portion 111 is deformed by a compression stress which is generated in the vicinity of a boundary with the small diameter cylindrical portion 116, causing a fear that a desired roundness of the flange portion and a desired flatness of the plane of the fl.ange portion with which the disk rotor is brought into contact cannot be obtained. In addition, in the event that the roundness and flatness cannot be obtained, the disk rotor is inclined relative to the plane vertical to a rotational axis due to the effect of the deformation produced by the reduction in round ness and flatness of the flange portion 111, whereby the contact state of the disk rotor with the brake pad becomes unstable, causing a fear that the unstable contact triggers abnormal noise and vibration.

In addition, as has been described, in the calking work, in the event that the force exceeding the estimation is exerted on the outer circumferential edge portion of the calking portion 118, a large force is exerted locally on the inner ring side raceway 121 of the inner ring 122 due to the inner ring side raceway 121 of the inner ring 122 and the rolling elements 126 being pressed by the force, leading to a fear of formation of brinelling.

Furthermore, a force directed radially outwards is exerted on a corner portion 122a at an end portion of the inner ring 122, leading to a fear of generation of a slight change in the diameter of the inner ring 122. Namely, when a large force out of estimation is imparted to press the inner ring 122, the force directed radially outwards is increased when forming the calking portion 118, whereby an expansion of the inner ring 122 is called for, leading to a fear that it becomes difficult to maintain the pressurization imparted to the rolling elements 126 to the proper value and to secure the durability. In particular, when attempting to secure a sufficient calking strength of the calking portion 118 for the purpose of preventing the rotation of the inner ring 122 relative to the shaft portion 112 of the hub wheel 110, the amount of deformation of the inner ring 122 tends to easily be increased, leading to a fear that it becomes difficult to secure the durability.

To cope with the problems with these three mutually conflicting phenomena that has been described above, it is conventional practice to take steps separately to deal with the three individual problems.

For example, a countermeasure against the problem with the fear that the roundness and flatness of the flange portion 111 are damaged is described in JP-A-2001-162338. In JP-A-2001-162338, a receiving surface which faces square to the direction in which the calking load is applied in the axial direction is formed within the small diameter cylindrical portion 116 of the shaft portion of the hub wheel 110, and the receiving surface is supported by a calking receiving jig.

In addition, JP-A-2001-3945 proposes a countermeasure against the problem with the fear that the brinelling is formed on the inner ring side raceway 121 of the inner ring 122. Namely, what is described in JP-A-2001-3945 is an idea conceived under the recognition that such brinelling tends to easily be produced when the outer circumferential edge side of the calking portion 118 is pressurized strongly more than required. Namely, in order for the outer circumferential edge side of the calking portion 118 not to be pressurized strongly more than required, the tight contact range of the calking portion 118 with the corner portion 122a at the end portion of the inner ring 122 is controlled to fall within a predetermined range. This method is such as to be intended to prevent the excessive pressurization of the inner ring 122 while securing a sufficient axial force.

As has been described above, in the conventional wheel rolling bearing unit, the problems with the three mutually conflicting phenomena occurring in the method for fixing the inner ring 122 to the hub wheel 110 by forming the calking portion 118 at the distal end portion of the small diameter portion 114 of the hub wheel 110 have been deal with individually by the separate techniques.

### SUMMARY OF THE INVENTION

The invention has been made in view of these situations, and an object thereof is to provide a rolling bearing unit for a wheel having a novel construction which can simultaneously solve the problems related to the so-called three mutually conflicting phenomena occurring in association with the calking work, that is, the reduction in roundness and flatness of the flange portion on which the disk brake unit is mounted, the generation of the brinelling on the inner ring side raceway due to the excessive pressure, and the reduction in durability of the inner ring due to the expansion of the inner ring.

With a view to attaining the object, according to an aspect of the invention, there is provided a rolling bearing unit for a wheel comprising:
an outer ring in which a flange part to be mounted on a body is formed on an outer circumferential surface thereof and double outer ring side raceways are formed on an inner circumferential surface thereof;
a hub wheel in which a flange portion to be mounted on a wheel is formed at one end of an outer circumferential surface thereof, a first inner ring side raceway which confronts one of the outer ring side raceways is formed at the other end of the outer circumferential surface thereof, and, a shaft fitting hole is formed in an axial center portion thereof;
an inner ring shaft portion in which one end portion thereof is formed into a small diameter shaft portion which fits into the shaft fitting hole in the hub wheel and another end portion thereof is formed into a large diameter shaft portion on an outer circumferential surface of which a second inner ring side raceway is formed which confronts the other of the outer ring side raceways; and
a calking portion in which a calking cylindrical portion is formed at a distal end of the small diameter shaft portion of the inner ring shaft portion and the calking.cylindrical portion is expanded radially outwards so as to be pressed against a flange portion side of the hub wheel in-which the shaft fitting hole is opened.

According to the rolling bearing unit for a wheel of the invention, calking is configured to be effected on the small diameter shaft portion side of the inner ring shaft portion which is situated at the end portion of the hub wheel where the flange portion that is mounted on the wheel is provided, and the outer ring and the end face of the large diameter shaft portion of the inner ring shaft portion are configured to be situated on the opposite side to the calking portion. Because of this, even in the event that the rolling bearing unit for a wheel is placed on the base table for calking work, in contrast to the conventional way of supporting the rolling bearing unit, the rolling bearing unit is not supported on the small diameter cylindrical portion formed in the central portion of the flange portion that is mounted on the wheel. Consequently, no compression stress is produced in the vicinity of the boundary between the flange portion and the small diameter cylindrical portion in any case, whereby the fear is eliminated that the roundness and flatness of the flange portion are damaged. In addition, the distance from the end face on the flange portion side of the hub wheel in which the shaft fitting hole is opened and against which the claming portion is pressed to the first inner ring side raceway is made longer due to the formation of the flange portion than the distance from the end face of the inner ring against which the calking portion is pressed to the inner ring side raceway in the conventional rolling bearing unit. Because of this, the force with which the first inner ring side raceway is pressed against the rolling elements is mitigated, as a result of which the fear is mitigated that the brinelling is produced on the first inner ring side raceway. In addition, the thickness of the end corner portion of the flange portion side of the shift fitting hole to which the calking force is made thicker than the thickness of the corner portion of the inner ring in the conventional rolling bearing unit due to the corner portion being situated at the end face of the end portion of the hub wheel where the flange portion is formed on the outer circumferential side thereof. Because of this, even in the event that a considerably large force directed radially outwards is applied, the durability which can withstand the force can be secured.

In addition, according to another aspect of the invention, there is provided a method for manufacturing the rolling bearing unit for a wheel that is according to the above aspect of the invention, wherein with an end face on an opposite side to the side where the calking portion is formed supported on a base table, the calking cylindrical portion is pres.sed against the end face in which the shaft fitting hole is opened, while being expanded radially outwards, so as to form the calking portion. According to this method, the calking work can be implemented by placing the rolling bearing unit on the base table in an ordinary fashion without using any special calking jig while mitigating generally the occurrence of the aforesaid three so-called mutually conflicting phenomena which occur in association with the calking work.

In addition, in this case, the end face supported on the base table is preferably a large diameter shaft portion side end face of the inner ring shaft portion. By this configuration, since the calking force is supported by the inner ring shaft portion against which the calking portion is pressed and which is directly mounted on the hub wheel, as a result of which the fear that the excessively large force is exerted on the pressing plane between the first inner ring side raceway and the second inner ring side raceway and the rolling elements can be mitigated in a more ensured fashion, thereby making it possible to mitigate the fear of production of brinelling on the first inner ring side raceway and the second inner ring side raceway in a more ensured fashion.

As has been described heretofore, according to the aspects of the invention, the three so-called mutually conflicting phenomena occurring in association with the calking work can simultaneously be mitigated which are the reduction in roundness and flatness of the flange portion, the generation of brinelling on the inner ring side raceways due to the excessive pressure, and the reduction in durability of the inner ring due to the expansion of the inner ring.

### BRIEF DESCRIPTION OF THE DRAWINGS

Fig. 1 is a vertical sectional view of a rolling bearing unit for a wheel according to Embodiment 1 of the invention which is being subjected to calking work.
Fig. 2 is a vertical sectional view of the rolling bearing unit for a wheel.
Fig. 3 is a vertical sectional view of a rolling bearing unit for a wheel according to Embodiment 2 of the invention which is being subjected to calking work.

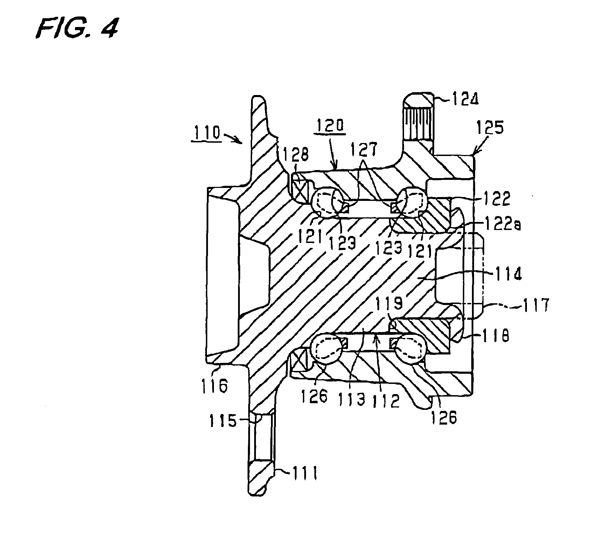

Fig. 4 is a vertical sectional view of a rolling bearing unit for a wheel according to a general example which is being subjected to calking work.
Fig. 5 is a vertical sectional view of the same rolling bearing unit for a wheel which is being subjected to calking work.

### DETAILED DESCRIPTION OF THE PREFERRED EMBODIMENTS

### (Embodiment 1)

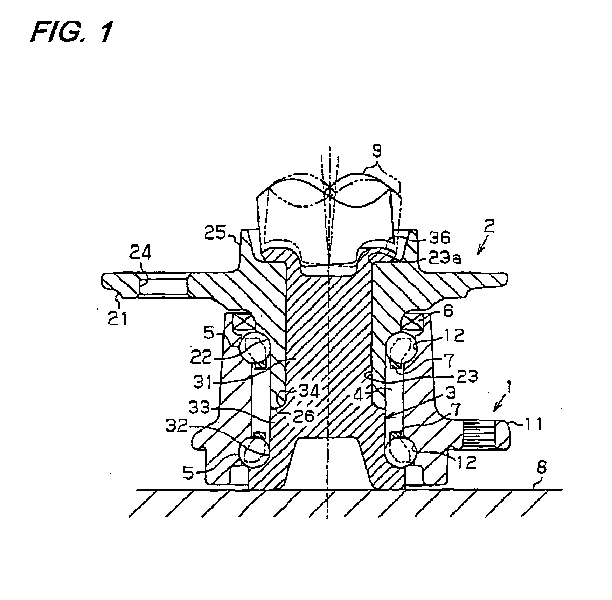

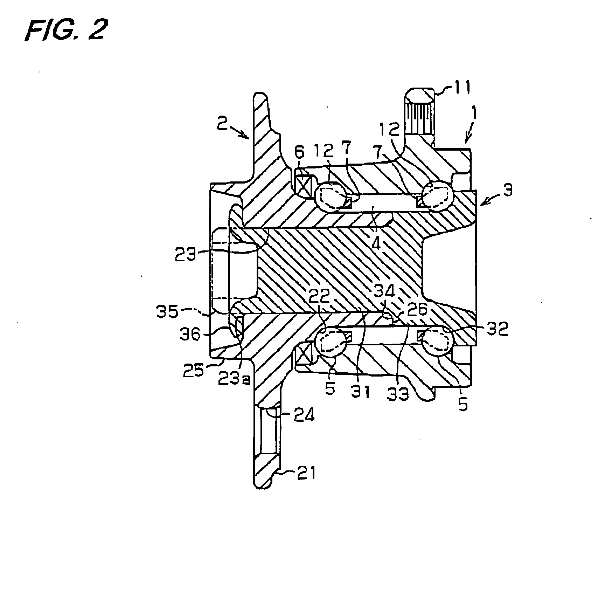

Hereinafter, Embodiment 1 of the invention will be described based on Figs. 1 and 2. Fig. 1 is a vertical sectional view of a rolling bearing unit for a wheel according to Embodiment 1 of the invention which is being subjected to calking work. Fig. 2 is a vertical sectional view of the rolling bearing unit for a wheel.

A rolling bearing unit for a wheel according to this embodiment is, as is shown in Figs. 1 and 2, made up of an outer ring 1, a hub wheel 2 and an inner ring shaft portion 3 which make up an internal member, an annular space portion 4 defined between the internal member and the outer ring 1, rolling elements 5 which are inserted in double rows in the annular space portion 4, sealing elements 6 which are mounted at end portions of the annular space portion 4 and cages 7 which retains the rolling elements 5 in predetermined positions.

In the outer ring 1, a flange part 11 which is mounted on a body is formed on an outer circumferential surface, and double outer ring side raceways 12 are formed on an inner circumferential surface.

In the hub wheel 2 which makes up the internal member, a flange portion 21 which is mounted on a wheel is formed at one end portion of an outer circumferential surface, and a first inner ring side raceway 22 which confronts one of the outer ring side raceways 12 is formed at the other end portion of the outer circumferential surface. Furthermore, a shaft fitting hole 23 is formed in an axial center portion.

Bolt insertion holes 24 are formed in the flange portion 21 of the hub wheel 2 in several locations in a circumferential direction. A disk brake unit mounting bolt is inserted into each bolt insertion hole 24 in such a manner as to pass therethrough. A small diameter cylindrical portion 25 is formed at the end portion of the hub wheel 2 where the flange portion 21 is formed in such a manner as to project from a central portion of the flange portion. In addition, a disk rotor of the disk brake unit, not shown, is detachably mounted on the small diameter cylindrical portion 25 by the bolts in such a state that the disk rotor is in tight contact with one side of the flange portion 21.

In addition, the inner ring shaft portion 3 which is the other member which makes up the internal member is formed so as to have a main body portion provided with a solid shaft (namely, the main body portion is not hollow) such that one end portion is formed into a small diameter shaft portion 31 which is inserted into the shaft fitting hole 23 in the hub wheel 2, and the other end portion is formed into a large diameter shaft portion 33 on an outer circumferential surface of which a second inner ring side raceway 32 which confronts the other of the outer ring side raceways 12 is formed. In addition, a stepped portion 34 is formed between the small diameter shaft portion 31 and the large diameter shaft portion 33.

The inner ring shaft portion 3 configured as described above and the hub wheel 2 also described above are combined with each other in such a state that the small diameter shaft portion 31 of the inner ring shaft portion 3 is inserted into the shaft fitting hole 23 in the hub wheel 2 with an end face 26 of the hub wheel 2 which lies on an opposite side to the side where the flange portion is formed kept in abutment with the stepped portion 34. In addition, the internal member is formed in which the first inner ring side raceway 22 and the second inner ring side raceway 32 are formed on the same circumferential surface by the small diameter shaft portion 31 being inserted into the shaft fitting hole 23 in the way described above, whereby the annular space portion 4 is formed in which the rolling elements 5 are arranged in double rows with the inner circumferential surface of the outer ring 1.

In addition, in such a state that the inner ring shaft portion 3 and the hub wheel 2 are combined together in the way described above and in order to impart a. suitable pressurization to the rolling elements 5 to connect them together, a calking cylindrical portion 35 (refer to Fig. 2) is formed at the end portion of the small diameter shaft portion 31 of the inner ring shaft portion 3. After the small diameter shaft portion 31 has been inserted into the shaft fitting hole 23, the calking cylindrical portion 35 is expanded radially outwards so as to be pressed against the perimeter of an end face of the end portion of the hub wheel 2 where the flange portion 21 is formed and the shaft fitting hole is opened, whereby a predetermined calking portion 36 is formed.

As is shown in Fig. 1, this calking work is performed by placing the rolling bearing unit for a wheel on a base table 8 with the end of the rolling bearing unit where the calking portion 36 is formed oriented upwards and by pushing a calking jig 9 downwards with a similar predetermined calking force to that applied in the conventional calking work while rolling it. By the calking work like this, the hub wheel 2 and the inner ring shaft portion 3 are connected together in such a state that the end face 26 of the hub wheel 2 which lies on the opposite side to the side where the flange portion is formed is pressed against the stepped portion 34 formed on the inner ring shaft portion 3. In addition, when the hub wheel 2 and the inner ring shaft portion 3 are connected integrally in this way, the internal member made up of the hub wheel 2 and the inner ring shaft portion 3 and the outer ring 1 are made to be pressed against each other via the rolling elements 5, whereby the proper pressurization is imparted. Then, an axial force (an axial load) is exerted from the internal member onto the rolling elements 5 due to the pressurization being so imparted, whereby the rolling elements 5 are allowed to roll properly within the annular space portion 4.

In the calking work described above, since the rolling bearing unit for a wheel is supported on the base table 8 by the end face of the large diameter shaft portion 33 of the inner ring shaft portion during the calking work, in contrast to what has occurred in the conventional calking work, no calking force is exerted on the small diameter cylindrical portion 25. Consequently, no compression stress is produced in any case in the vicinity of the boundary between the flange portion 21 and the small diameter cylindrical portion 25, and hence, the roundness and flatness of the flange portion 21 are damaged in no case.

In addition, although the radially outwardly directed force is applied to an end corner portion 23a of the shaft fitting hole 23 in the hub wheel 2, since the flange portion 21 is formed on an outer circumferential side of the end corner portion 23a, the thickness of a portion of the wheel hub 2 which lies on the perimeter of the end corner portion 23a is generally formed thicker than that of the corresponding portion of the conventional rolling bearing unit. Because of this, even though the radially outwardly directed calking force is applied thereto, the end corner portion 23a can withstand the force.

Additionally, a distance from the end face of the end portion of the hub wheel 2 where the flange portion 21 is formed against which the calking portion 36 is pressed to the first inner ring raceway 22 is made longer due to the flange portion 21 being formed on the outer circumferential surface than the distance from the end face against which the calking portion is pressed to the inner ring side raceway in the conventional rolling bearing unit. Because of this, the force with which the first inner ring side raceway 22 and the second inner ring side raceway 32 are pressed against the rolling elements 5 is mitigated, as a result of which the fear is mitigated that brinelling is produced on the first inner ring side raceway 22 and the second inner ring raceway 32.

Since the embodiment is configured as has been described heretofore, the following advantages can be provided.
(1) The fear.of occurrence of the mutually conflicting phenomena in association with the calking work can all be mitigated which are the reduction in roundness and flatness of the flange portion on which the disk brake unit is mounted, the production of brinelling on the inner ring side raceways due to the excessive pressure and furthermore, the reduction in durability of the inner ring due to the expansion of the inner ring.
(2) In addition, since in the method for manufacturing the rolling bearing unit for a wheel according to this embodiment, the calking cylindrical portion 35 is clamped in such a state that the end face which is opposite to the end face where the calking portion 36 is formed is supported on the base table 8, the calking work can be implemented by placing the rolling bearing unit on the base table in an ordinary fashion without using any special calking jig.
(3) In addition, as that occurs, the end face that is supported on the base table 8 is made to be the end face of the end portion of the inner ring shaft portion 3 that is formed into the large diameter shaft portion 33. Because of this, since the calking force is supported by the inner ring shaft portion 3 which is combined directly with the hub wheel 2 against which the calking portion 36 is pressed without being transmitted by way of the rolling elements 5, as a result of which the application of excessive force to the pressing plane between the first inner ring side raceway 22 and the second inner ring side raceway 32 and the rolling elements 5 can be mitigated in a more ensured fashion, and consequently, the production of brinelling on the first inner ring side raceway 22 or the second inner ring side raceway 32 can be mitigated in a more ensured fashion.

### (Embodiment 2)

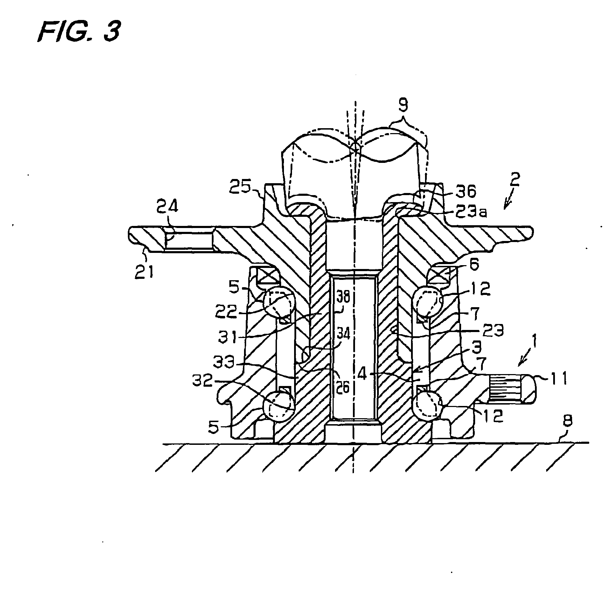

Next, Embodiment 2 will be described based on Fig. 3.

The rolling bearing unit for a wheel according to Embodiment 1 is described as being applied to the rolling bearing unit which supports the driven wheel such as a rear wheel of an FF vehicle (front-engine, front-wheel-drive vehicle) or a front wheel of a FR vehicle (front-engine, rear-wheel-drive vehicle). In contrast to this, a rolling bearing unit according to Embodiment 2 will be described as being: applied to a rolling bearing unit which supports a front-wheel of the FF vehicle, a rear wheel of the RF vehicle or any of all the four wheels of a 4WD vehicle (four-wheel or all-wheel-drive vehicle).

In this rolling bearing unit for a wheel, the inner ring portion 3 is provided with a hollow shaft such that a spline hole 38 is provided in an axial center portion of the inner ring shaft portion 3, whereas the ring portion 3 is provided with a solid shaft in Embodiment 1, and a shaft portion of a constant velocity joint or a distal end of a drive shaft or axle is brought into spline engagement with the spline hole 38 so provided. In addition, the other configurations are the same as those of Embodiment 1. Consequently, the rolling bearing unit of this embodiment can provide the same function and advantage that could be provided by the rolling bearing unit of Embodiment 1.

The rolling bearing units according to the embodiments can be modified as below.
(1) In the previous embodiment, while the end face of the end portion of the inner ring shaft portion 3 that is formed into the large diameter shaft portion 33 is supported on the base table 8, the other portions than the end face of the end portion of the inner ring shaft portion 3 that is formed into the large diameter shaft portion 33 may be made to be supported on the base table 8, provided that the end face that is then supported on the base table 8 is the end face which is opposite to the end face where the calking portion 36 is formed: For example, the end face of the outer ring 1 or the end face of the flange portion may be supported on the base table 8. Note that in the event that the configuration as in the previous embodiment is adopted in which the rolling bearing unit is supported on the base table 8 by the end face of the end portion of the inner ring shaft portion 3 that is formed into the large diameter shaft portion 33, it becomes easier to mitigate the application of excessive force between the rolling elements 5 and the first inner ring side raceway 22 and the second inner ring side raceway 23.
(2) In the previous embodiment, while the rolling bearing unit is described as being applied to the double row angular ball bearing unit, even in the event that the invention is applied to a rolling bearing unit for a wheel which utilizes rolling elements in another form such as tapered rollers, cylindrical rollers, spherical rollers or the like, the same advantages can be obtained.

In Embodiment 2, while the rolling bearing unit is described as being applied to the rolling bearing unit for a wheel that is used to supports a drive wheel in which the spine hole 38 is formed in the axial center portion of the inner ring shaft portion 3 for connection with the drive shaft, the invention is not limited thereto, and hence, a hole may be adopted in which serrations are formed.

## Claims

1. A rolling bearing unit for a wheel comprising:
an outer ring in which a flange part to be mounted on a body is formed on an outer circumferential surface thereof and double outer ring side raceways are formed on an inner circumferential surface thereof;
a hub wheel in which a flange portion to be mounted on a wheel is formed at one end of an outer circumferential surface thereof, a first inner ring side raceway which confronts one of the outer ring side raceways is formed at the other end of the outer circumferential surface thereof, and, a shaft fitting hole is formed in an axial center portion thereof;
an inner ring shaft portion in which one end portion thereof is formed into a small diameter shaft portion which fits into the shaft fitting hole in the hub wheel and another end portion thereof is formed into a large diameter shaft portion on an outer circumferential surface of which a second inner ring side raceway is formed which confronts the other of the outer ring side raceways; and
a calking portion in which a calking cylindrical portion is formed at a distal end of the small diameter shaft portion of the inner ring shaft portion and the calking cylindrical portion is expanded radially outwards so as to be pressed against a flange portion side of the hub wheel in which the shaft fitting hole is opened.

2. A method for manufacturing the rolling bearing unit for a wheel according to Claim 1, wherein with an end face on an opposite side to the side where the calking portion is formed supported on a base table, the calking cylindrical portion is pressed against the end face in which the shaft fitting hole is opened, while being expanded radially outwards, so as to form the calking portion.

3. A method for manufacturing the rolling bearing unit for a wheel according to Claim 2, wherein the end face supported on the base table is a large diameter shaft portion side end face of the inner ring shaft portion.

4. A rolling bearing unit for a wheel according to Claim 1, wherein the inner ring shaft portion is formed as a solid shaft.

5. A rolling bearing unit for a wheel according to Claim 1, wherein a spline hole is provided in an axial center portion of the inner ring shaft portion.
